# EUROPÄISCHE PATENTSCHRIFT

(11) **EP 2 314 978 B1**
(45) Veröffentlichungstag und Bekanntmachung des Hinweises auf die Patenterteilung: **02.08.2017**
(21) Anmeldenummer: 10188137.3
(22) Anmeldetag: 20.10.2010
(51) Int. Cl.: F41G 1/38, G02B 27/36

(54) **Arretierbare Stellvorrichtung zum Verstellen einer Abseheneinrichtung**
Indexable adjusting device for adjusting an aiming device
Dispositif de réglage arrêtable pour le réglage d'un dispositif de visée

(30) Priorität: 20.10.2009 DE 102009050089
(43) Veröffentlichungstag der Anmeldung: 27.04.2011
(73) Patentinhaber: SCHMIDT & BENDER GmbH & Co. KG, 35444 Biebertal (DE)
(72) Erfinder: Schmitt, Christoph, 69198, Schriesheim (DE)
(74) Vertreter: Patentanwälte Olbricht Buchhold Keulertz

(56) Entgegenhaltungen:
- CN-A- 1 815 135
- DE-U1-202006 003 770
- US-A1- 2009 044 660

## Beschreibung

Die Erfindung betrifft eine Stellvorrichtung zum Einstellen von an die Stellvorrichtung koppelbaren Bauteilen, insbesondere zum Verstellen einer Abseheneinrichtung eines Zielfernrohres gemäß dem Oberbegriff von Anspruch 1.

Derartige Vorrichtungen finden bevorzugt Anwendung bei feinmechanischen Geräten wie optischen Instrumenten, Zielfernrohren und dergleichen. Beispielsweise ist in DE 297 207 37 U1 ein Zielfernrohr mit einem rohrförmigen Gehäuse beschrieben, das Tubusfassungen für ein Okular- und ein Objektivsystem aufweist. Dabei sind in einem Mittelrohr ein optisches Umkehrsytem und ein diesem zugeordnetes Absehen vorhanden, das am Doppelrohr in einer Fassung fest montiert ist.

Außen sind in Umfangsabständen von 90 Grad wenigstens zwei Verstelltürme befestigt, die einen Rastring oder eine Stellkappe haben. Ein mit Gewinde versehener Trieb ist im Rohrkörperschlitz geführt und drückt gegen Federkraft vorn auf das Umkehrsystem; er ist in seiner Längsrichtung durch Drehen des Rastrings beziehungsweise der Stellkappe vor und zurück bewegbar.

Herkömmlicherweise hat ein derartiger, um insgesamt etwa 360 Grad drehbarer Rastring eine feine Rastung solcher Aufteilung, dass er beim Drehen (Klickverstellen) jeweils einen Schritt weiter rückt, was die Treffpunklage auf 100 m zum Beispiel um 10 mm verändert. Auf dem Außenumfang des Verstellturms ist eine Skala aufgebracht, an der man die vorgenommene Korrektur ablesen kann. Je nach Teilung ist zum Beispiel jeder Klick mit einer weißen Linie markiert, während jeder zehnte Klick durch eine Zahl angegeben markiert.

Für Scharfschützen oder andere spezielle Einsatzzwecke, insbesondere bei Schussweiten von bis zu 2000 m entspricht eine Klickrastung, d.h. ein einzelner Klick, einer Treffpunktversetzung von bis zu 200 mm. Es ist daher notwendig die Einstellposition der Abseheneinrichtung als Schütze genau zu kennen. Tagsüber kann dazu die aufgebrachte Skala dienen.

Um bei Dunkelheit eine gezielte und überprüfbare Einstellung vorzunehmen, muss der Bediener die Anzahl der bei der Einstellung spürbaren Rastvorgänge bis zu einer gewünschten Einstellposition oder Fixierung der Stellvorrichtung haptisch oder sensomotorisch erfassen, d.h., der Benutzer spürt jeden Einrastvorgang und kann anhand der Anzahl der Einrastvorgänge genau zuordnen, welche Einstellung zu der Anzahl an Einrastvorgängen gehört.

Bei feiner Rasterung und damit verbunden bei einem großen Einstellbereich besteht die Gefahr, dass sich der Benutzer während der Einstellung verzählt und so eine verlässliche Einstellung nicht sichergestellt ist. Insbesondere bei Rasterungen, die keine Begrenzung auf die einmalige Verwendung des gesamten Rasterbereichs aufweisen, d.h. bei Rasterung, die zur Einstellung mehrfach durchlaufen werden können, wie dies beispielsweise bei auf scheibenförmigen Elementen aufgebrachten Rasterungen der Fall ist, die nicht begrenzt sind, besteht die Gefahr, dass der Benutzer sich leicht auf Grund der hohen Anzahl an Einrastvorgängen verzählt.

Häufig ist es aber in der Anwendung so, dass der Schütze die zuletzt geschossene Entfernung und somit die Einstellung der Abseheneinrichtung kennt. Ausgehend von dieser Position könnte nun eine Anpassung an die neue Schussdistanz vorgenommen werden.

Problematisch bei den bekannten Lösungen im Stand der Technik ist jedoch, dass bei einer Ortsverlegung des Schützen nicht gewährleistet werden kann, dass sich die Abseheneinrichtung nicht unbeabsichtigt verstellt. Eine Verstellung kann zum Beispiel dadurch geschehen, dass Kleidungsstücke an der Stellkappeneinrichtung reiben. CN 1 815 135 A offenbart entsprechend dem Oberbegriff des Anspruchs 1 eine Stellvorrichtung zum Einstellen von an die Stellvorrichtung koppelbaren Bauteilen, insbesondere zum Verstellen einer Abseheneinrichtung eines Zielfernrohrs. Diese weist ein drehbar an einem Koppelteil gelagerte Stellkappeneinrichtung zur Betätigung der Stellvorrichtung auf. Das Koppelteil ist so ausgebildet, dass sich Bewegungen der Stellkappeneinrichtung auf mit dem Koppelteil verbindbare Bauteile zwecks deren Einstellung übertragen lassen. Das Koppelteil wird hierzu dreh- und axialfest mit dem Korpus eines Zielfernrohres verbunden. Am Koppelteil ist ein erstes Arretiermittel angeordnet, welches mit einem zweiten Arretiermittel der Stellkappeneinrichtung in Eingriff bringbar ist. Damit ist die Drehposition der Stellkappeneinrichtung relativ zum Koppelteil und damit zum Zielfernrohr arretierbar.

Es ist Aufgabe der Erfindung, eine Stellvorrichtung zum Einstellen an eine Stellvorrichtung koppelbaren Bauteilen, insbesondere zum Verstellen einer Abseheneinrichtung eines Zielfernrohres zu schaffen, die gegen unbeabsichtigtes Verstellen und dadurch bedingte Fehleinstellungen gesichert ist und auch bei Dunkelheit für den Benutzer sicher bedienbar ist. Zweckmäßigerweise soll sie einfach aufgebaut und günstig in der Herstellung sowie robust und langlebig im Gebrauch sein.

Diese Aufgabe wird gemäß einer Stellvorrichtung nach Anspruch 1 gelöst. Eine erfindungsgemäße Stellvorrichtung zum Einstellen von an die Stellvorrichtung koppelbaren Bauteilen, insbesondere zum Verstellen einer Abseheneinrichtung eines Zielfernrohres, mit einer drehbaren an einem Koppelteil gelagerten Stellkappeneinrichtung zur Betätigung der Stellvorrichtung, wobei das Koppelteil ausgebildet ist, um die Bewegung der Stellkappeneinrichtung auf mit dem Koppelteil verbindbare Bauteile zwecks deren Einstellung zu übertragen, wobei ein am Koppelteil angeordnetes, erstes Arretiermittel mit einem zweiten Arretiermittel derart in Eingriff bringbar ist, dass die Position der Stellkappeneinrichtung relativ zum Koppelteil arretiert ist, wobei das zweite Arretiermittel zumindest segmentweise ein innenverzahnter Arretierring ist, sieht vor, dass ein federnd gelagertes Rastmittel am Koppelteil mit Rastausnehmungen in einem Rastring an der Stellkappeneinrichtung korrespondierend in Eingriff bringbar ist, wobei der Arretierring und der Rastring die gleiche Rastteilung aufweisen.

Koppelbare Bauteile, an welche die Stellvorrichtung koppelbar ist, können insbesondere optische Visiereinrichtungen wie beispielsweise Zielfernrohre sein. Zur Kopplung der Stellvorrichtung an diese Bauteile ist ein Koppelteil vorgesehen. Das Koppelteil kann beispielsweise ein in einer Hülse gelagerter Gewindestift sein. Jede andere Lösung, die eine rotatorische Bewegung einer Stellvorrichtung in eine Verstellbewegung transformiert kann jedoch ebenso als Koppelteil verstanden werden. Um die Stellvorrichtung zu betätigen, ist eine Stellkappeneinrichtung vorgesehen, welche drehbar an dem Koppelteil gelagert ist. Die Drehung der Stellkappeneinrichtung wird durch das Koppelteil an das einzustellende Bauteil übertragen.

Vorteilhaft bei der erfindungsgemäßen Ausgestaltung ist, dass ein am Koppelteil angeordnetes Arretiermittel nicht in die Mechanik innerhalb des Koppelteils eingreift. Vielmehr verbleibt der gesamte Bauraum innerhalb des Koppelteils für andere technische Anwendungen. Beispielsweise können hier aufwendige Rastmechanismen untergebracht werden.

Bei einer Weiterbildung der Erfindung ist das erste Arretiermittel ein außenverzahnter Arretierkranz. Dadurch bleibt am Koppelteil noch mehr Bauraum verfügbar, da die Rastzähne in Richtung der Stellkappeneinrichtung orientiert sind. Ein innenliegender Arretiermechanismus kann entfallen. Die Ausbildung als umlaufender Kranz hat zudem den Vorteil, dass Torsionsspannungen, die aus einer Einwirkung auf die Stellkappe resultieren, möglichst homogen auf das Koppelteil verteilt werden. Weiterhin können durch die Ausbildung des Arretiermittels als Arretierkranz nahezu beliebig viele Positionen verrastet werden.

Vorteilhaft ist weiterhin, dass das zweite Arretiermittel ein innenverzahnter Arretierring ist. Bei dieser Ausbildung können die Torsionsspannungen, die aus einer Einwirkung auf die Stellkappe resultieren, möglichst homogen verteilt werden. Weiterhin können durch die Ausbildung des Arretiermittels als Arretierring nahezu beliebig viele Positionen verrastet werden.

Eine weitere Verbesserung der Stellvorrichtung stellt das federnd gelagerte Rastmittel am Koppelteil dar, welches mit Rastausnehmungen in einem Rastring an der Stellkappeneinrichtung korrespondierend in Eingriff bringbar ist. Dadurch wird eine Einstellung der Stellvorrichtung enorm erleichtert. Über die durch Rastmittel und Rastausnehmung gebildete Rasteinrichtung kann der Benutzer spüren und hören, wenn ein Rastvorgang erfolgt. Jedem Rastvorgang lässt sich dadurch eine entsprechende Verstellung zuordnen.

Erfindungsgemäß ist weiterhin vorgesehen, dass der Arretierring und der Rastring die gleiche Rastteilung aufweisen. Dadurch können im Wesentlichen die gleichen Ringrohlinge verwendet werden. Produktionskosten werden durch verringerte Lagerhaltung reduziert.

Besonders vorteilhaft ist der Arretierring mittels eines Passstifts verdrehsicher zum Rastring gelagert. Der Passstift stellt sicher, dass die Ringe stets mit der gleichen Rastverzahnung übereinander stehen. Die Rasten der Innenverzahnung des Rastrings sowie des Arretierrings fluchten somit immer. Dadurch wird die eingestellte Position auch während des Verschiebens des Arretierrings auf den Arretierkranz nicht mehr verändert, was eine präzise Lagesicherung gewährleistet.

Bevorzugt ist der Arretierring auf dem Passstift axialverschieblich führbar. Auf eine zusätzliche Führung für den Arretierring kann somit verzichtet werden. Der Passstift gewährleistet, eine translatorische Bewegung des Arretierrings relativ zum Rastring, während er eine rotatorische Bewegung unterbindet. Somit wird auf einfache Weise erreicht, dass die Verzahnung des Arretierrings immer kantfrei auf den Arretierkranz gleitet. Eine Weiterbildung sieht zudem vor, dass der Passstift an der Stellkappeneinrichtung fixiert ist. Dies geschieht vorzugsweise durch Verpressen oder Verkleben. Die Anzahl der benötigten Bauteile wird somit weiter gesenkt, was zu geringeren Produktionskosten der gesamten Stellvorrichtung führt.

Bei einer erfindungsgemäßen Ausführungsform ist der Arretierring an einer axialverschieblichen Hülse befestigt. Die Hülse erleichtert vorteilhafterweise die Bedienung des Arretierrings. Ist dieser an einer Hülse befestigt, so kann der Arretierring von außen in seiner Position bewegt werden. Wird die Hülse vom Schützen nach unten gedrückt, so schiebt sich der Arretierring auf den Arretierkranz. Über den Passstift, welcher den Arretierring und den Rastring an einer gegenseitigen Verdrehung hindert, ist sichergestellt, dass die Stellkappeneinrichtung gegen ein unbeabsichtigtes Verdrehen gesichert ist. Wird die Hülse nach oben gezogen, so wird der Arretierring vom Arretierkranz abgezogen und in Richtung Rastring geführt. Rastring und Arretierring sind wieder mittels Stellkappeneinrichtung bewegbar.

Alternativ kann der Arretierring auch anders bewegt werden. Die Bedienung mittels einer Hülse stellt zudem sicher, dass kein Staub oder Schmutz in den Arretiermechanismus gelangt, da die gesamte Mechanik gekapselt sein kann. Alternativ könnte der Arretierring aber auch direkt vom Schützen greif- und damit bewegbar sein.

Um die Hülse durch den Schützen besser bewegen zu können, weist sie einen Vorsprung auf. Dadurch ist auch in der Nacht und durch Handschuhe hindurch eine einfache und verlässliche Bedienung gewährleistet. Die Hand des Schützen findet an diesem Vorsprung eine Griffhilfe.

Besonders vorteilhaft ist die Lösung derart, dass an der Hülse Rastmittel angeordnet sind, die mit einem Rastmittel an der Stellkappeneinrichtung derart miteinander wirken, dass unterschiedliche Rastpositionen festlegbar sind. Diese Rastmittel versetzen den Schützen in die Lage zu spüren, in welcher Position der Arretierring sicher auf dem Arretierkranz sitzt bzw. diesen verlässlich freigibt. Durch diese taktilen Hilfen kann der Schütze die Arretierung auch in der Nacht vornehmen.

Bevorzugt sind Dichtmittel zwischen Hülse und Stellkappeneinrichtung angeordnet, die ein Eindringen von Staub, Wasser und Schmutz zwischen Hülse und Stellkappeneinrichtung verhindern. Werden zudem Dichtmittel zwischen Hülse und Koppelteil angeordnet, so sind alle innen liegenden Teile der Stellvorrichtung vor Umwelteinflüssen aus Staub, Wasser und Schmutz geschützt.

Idealerweise ist der Arretierkranz am Koppelteil durch einen Stift und korrespondierende Ausnehmungen verdrehsicher befestigt. Er kann zwar auch mit dem Koppelteil verklebt sein, allerdings werden die Klebeverbindungen durch die ständigen Lastwechsel mit der zeit spröde. Stift und Ausnehmungen fixieren den Arretierkranz für die gesamte Lebensdauer der Stellvorrichtung zuverlässig in seiner Position relativ zum Koppelteil.

Hauptmerkmale der Erfindung sind im kennzeichnenden Teil von Anspruch 1 angegeben. Ausgestaltungen sind Gegenstand der Ansprüche 2 bis 11.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine erfindungsgemäße Stellvorrichtung in nicht arretierter Stellung;
- Fig. 2: eine erfindungsgemäße Stellvorrichtung in arretierter Stellung.

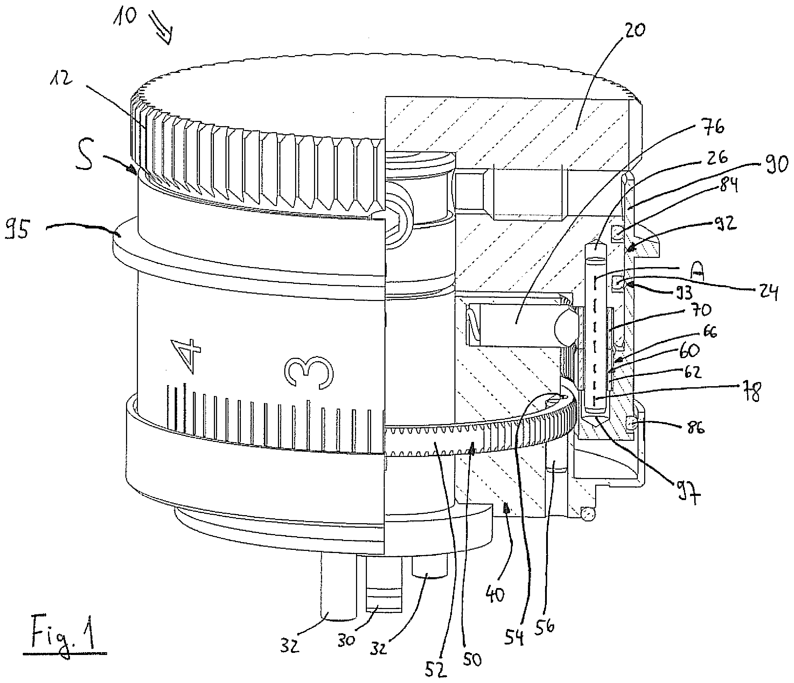

Figur 1 zeigt eine Stellvorrichtung 10 zum Einstellen von an die Stellvorrichtung koppelbaren Bauteilen, insbesondere zum Verstellen einer Abseheneinrichtung eines Zielfernrohres, mit einer drehbar an einem Koppelteil 40 gelagerten Stellkappeneinrichtung 20 zur Betätigung der Stellvorrichtung 10, wobei das Koppelteil 40 ausgebildet ist, um die Bewegung der Stellkappeneinrichtung 20 auf die mit dem Koppelteil 40 verbindbaren Bauteile zwecks deren Einstellung zu übertragen, wobei ein am Koppelteil 40 angeordnetes erstes Arretiermittel 50 mit einem zweiten Arretiermittel 60 derart in Eingriff bringbar ist, dass die Position der Stellkappeneinrichtung 20 relativ zum Koppelteil 40 arretiert ist.

Dabei ist das erste Arretiermittel 50 ein außenverzahnter Arretierkranz 52, während das zweite Arretiermittel 60 einen innenverzahnter Arretierring 62 ist. Ein federnd gelagertes Rastmittel 76 am Koppelteil 40 ist mit Rastausnehmungen in einem Rastring 70 an der Stellkappeneinrichtung 20 korrespondierend in Eingriff bringbar.

Dabei weisen der Arretierring 62 und der Rastring 70 die gleiche Rasteinteilung auf. Ein Passstift 78 sichert den Arretierring 62 verdrehsicher zum Rastring 70. Dabei ist der Arretierring 62 entlang einer Achse A auf dem Passstift 78 axialverschieblich geführt. Der Passstift 78 ist dabei in einer Bohrung 26 der Stellkappeneinrichtung 26 fixiert.

Figur 1 zeigt weiterhin, dass der Arretierring 62 ist an einer axialverschieblichen Hülse 90 befestigt ist. Die Hülse 90 besitzt dazu eine Kontaktfläche 66, an welcher der Arretierring 62 kraftschlüssig befestigt ist.

Innerhalb der Hülse 90 ist eine sacklochartige Ausnehmung 97 ausgebildet, die beim Verschieben des Arretierrings 62 entlang der Achse A in die nicht arretierte Position den Passstift 78 soweit nötig aufnimmt. Die Hülse 90 verfügt zudem über einen Vorsprung 95. An der Hülse angeordnete Rastmittel 92, 93 sind je nach Position mit einem Rastmittel 24 an der Stellkappeneinrichtung 20 festlegbar.

Zwischen Hülse 90 und Stellkappeneinrichtung 20 sind Dichtmittel 84 angeordnet. Weitere Dichtmittel 86 finden Anwendung zwischen Hülse 90 und Koppelteil 40. Der Arretierkranz 52 ist am Koppelteil 40 durch einen Stift 56, sowie korrespondierender Ausnehmung 54 verdrehsicher befestigt. Weiterhin zeigt Figur 1 den Trieb 30 sowie Rohrverschraubungen 32.

Aus Figur 1 ebenfall erkennbar ist, dass der Spalt S zwischen Hülse 90 und Rändelrad 12 nahezu vollständig geschlossen ist. In dieser nicht arretierten Position ist der Arretierring 62 entlang dem Passstift 78 in Richtung Rastring 70 verschoben und steht nicht mit dem Arretierkranz 52 in Eingriff. Das Rastmittel 93 steht mit dem Rastmittel 24 in Korrespondenz und verhindert ein unbeabsichtigtes Verschieben der Hülse 90. Die nicht arretierte Position (Bedienposition) ist eingenommen, die Stellkappeneinrichtung 20 ist somit bedienbar.

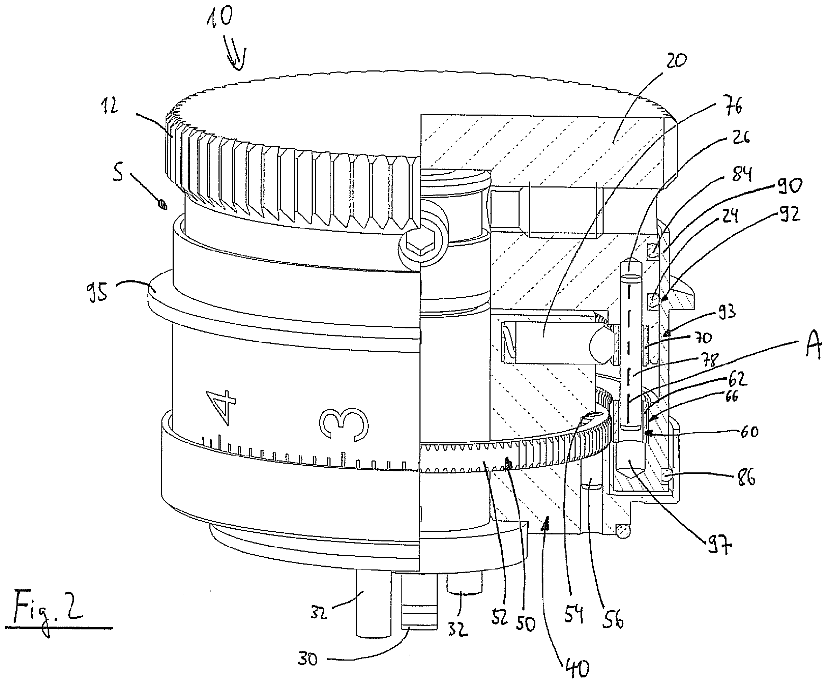

Figur 2 zeigt selbige Vorrichtung in der arretierten Position (Arretierposition). Der Spalt S zwischen Hülse 90 und Rändelrad 12 ist deutlich weiter geöffnet. Hier könnte auf der Stellkappeneinrichtung 20 noch eine Beschriftung untergebracht werden. In dieser arretierten Position ist der Arretierring 62 entlang dem Passstift 78 in Richtung Arretierkranz 52 geschoben. Der Arretierring 62 umfasst den Arretierkranz 52 im vorliegenden Ausführungsbeispiel vollumfänglich. Eine segmentweise Umgreifung bewirkt aber Entsprechendes.

Die Verzahnung des Arretierkranzes 52 steht mit der Verzahnung des Arretierrings 62 in Eingriff und verhindert ein unbeabsichtigtes Verdrehen der Stellkappeneinrichtung 20. Das Rastmittel 92 steht mit dem Rastmittel 24 in Korrespondenz und verhindert ein unbeabsichtigtes Verschieben der Hülse 90. Die arretierte Position (Arretierposition) ist eingenommen, die Stellkappeneinrichtung 20 ist nicht bedienbar.

### Bezugszeichenliste

- 10: Stellvorrichtung
- 12: Rändelrad
- 20: Stellkappeneinrichtung
- 24: Rastmittel
- 26: Bohrung

- 30: Trieb
- 32: Rohrverschraubung

- 40: Koppelteil
- 50: erstes Arretiermittel
- 52: Arretierkranz

- 60: zweites Arretiermittel
- 62: Arretierring
- 66: Kontaktfläche
- 70: Rastring
- 76: Rastmittel
- 78: Passstift

- 84,86: Dichtmittel

- 90: Hülse
- 92: Rastmittel Arretierposition
- 93: Rastmittel Bedienposition
- 95: Vorsprung
- 97: Ausnehmung
- A: Achse A
- S: Spalt

## Patentansprüche

1. Stellvorrichtung (10) zum Einstellen von an die Stellvorrichtung koppelbaren Bauteilen, insbesondere zum Verstellen einer Abseheneinrichtung eines Zielfernrohrs, mit einer drehbar an einem Koppelteil (40) gelagerten Stellkappeneinrichtung (20) zur Betätigung der Stellvorrichtung (10), wobei das Koppelteil (40) ausgebildet ist, um die Bewegungen der Stellkappeneinrichtung (20) auf mit dem Koppelteil (40) verbindbare Bauteile zwecks deren Einstellung zu übertragen, wobei ein am Koppelteil (40) angeordnetes, erstes Arretiermittel (50) mit einem zweiten Arretiermittel (60) derart in Eingriff bringbar ist, dass die Position der Stellkappeneinrichtung (20) relativ zum Koppelteil (40) arretiert ist, wobei das zweite Arretiermittel (60) zumindest segmentweise ein innenverzahnter Arretierring (62) ist, **dadurch gekennzeichnet, dass** ein federnd gelagertes Rastmittel (76) am Koppelteil (40) mit Rastausnehmungen in einem Rastring (70) an der Stellkappeneinrichtung (20) korrespondierend in Eingriff bringbar ist, wobei der Arretierring (62) und der Rastring (70) die gleiche Rastteilung aufweisen.

2. Stellvorrichtung (10) nach einem der vorhergehenden Ansprüche, **dadurch gekennzeichnet, dass** das erste Arretiermittel (50) zumindest segmentweise ein außenverzahnter Arretierkranz (52) ist.

3. Stellvorrichtung (10) nach Anspruch 2, **dadurch gekennzeichnet, dass** der Arretierkranz (52) am Koppelteil (40) durch einen Stift (56) und korrespondierende Ausnehmungen (54) verdrehsicher befestigt ist.

4. Stellvorrichtung (10) nach einem der vorhergehenden Ansprüche, **dadurch gekennzeichnet, dass** der Arretierring (62) mittels eines Passstifts (78) verdrehsicher zum Rastring (70) gelagert ist.

5. Stellvorrichtung (10) nach Anspruch 4, **dadurch gekennzeichnet, dass** der Arretierring (62) auf dem Passstift (78) axialverschieblich führbar ist.

6. Stellvorrichtung (10) nach einem der Ansprüche 4 oder 5, **dadurch gekennzeichnet, dass** der Passstift (78) an der Stellkappeneinrichtung (20) fixiert ist.

7. Stellvorrichtung (10) nach einem der vorhergehenden Ansprüche, **dadurch gekennzeichnet, dass** der Arretierring (62) an einer axialverschieblichen Hülse (90) befestigt ist.

8. Stellvorrichtung (10) nach Anspruch 7, **dadurch gekennzeichnet, dass** die Hülse (90) einen Vorsprung (95) aufweist.

9. Stellvorrichtung (10) nach einem der Ansprüche 7 oder 8, **dadurch gekennzeichnet, dass** an der Hülse (90) Rastmittel (92, 93) angeordnet sind, die mit einem Rastmittel (24) an der Stellkappeneinrichtung (20) derart miteinander wirken, dass unterschiedliche Rastpositionen festlegbar sind.

10. Stellvorrichtung (10) nach einem der Ansprüche 7 bis 9, **dadurch gekennzeichnet, dass** Dichtmittel (84) zwischen Hülse (90) und Stellkappeneinrichtung (20) angeordnet sind.

11. Stellvorrichtung (10) nach einem der Ansprüche 7 bis 10, **dadurch gekennzeichnet, dass** Dichtmittel (86) zwischen Hülse (90) und Koppelteil (40) angeordnet sind.

## Claims

1. Adjusting device (10) for adjusting components able to be coupled to the adjusting device, in particular for moving a shearing device of a telescopic sight, having a cap adjusting device (20), mounted rotatably on a coupling part (40), for actuating the adjusting device (10), wherein the coupling part (40) is formed in order to transfer the movements of the cap adjusting device (20) to components able to be connected to the coupling part (40) for the purpose of the adjustment thereof, wherein a first locking means (50) arranged on the coupling part (40) is able to be brought into engagement with a second locking part (60) in such a way that the position of the cap adjusting device (20) is locked relative to the coupling part (40), wherein the second locking means (60) is, at least in segments, an inner-toothed locking ring (62), **characterised in that** an elastically mounted latching means (76) on the coupling part (40) is able to be brought into corresponding engagement with latch recesses in a latching ring (70) on the cap adjusting device (20), wherein the locking ring (62) and the latching ring (70) have the same latch spacing.

2. Adjusting device (10) according to one of the preceding claims, **characterised in that** the first locking means (50) is, at least in segments, an outer-toothed locking collar (52).

3. Adjusting device (10) according to claim 2, **characterised in that** the locking collar (52) is fastened to the coupling part (40) in a manner secured against rotation by a pin (56) and corresponding recesses (54).

4. Adjusting device (10) according to one of the preceding claims, **characterised in that** the locking ring (62) is mounted to be secure against rotation with respect to the locking ring (70) by means of a dowel pin (78).

5. Adjusting device (10) according to claim 4, **characterised in that** the locking ring (62) is able to be guided in an axially displaceable manner on the dowel pin (78).

6. Adjusting device (10) according to one of claims 4 or 5, **characterised in that** the dowel pin (78) is fixed to the cap adjusting device (20).

7. Adjusting device (10) according to one of the preceding claims, **characterised in that** the locking ring (62) is fastened to an axially displaceable sleeve (90).

8. Adjusting device (10) according to claim 7, **characterised in that** the sleeve (90) has a ledge (95).

9. Adjusting device (10) according to one of claims 7 or 8, **characterised in that** latching means (92, 93) are arranged on the sleeve (90), which work together with a latching means (24) on the cap adjusting device (20) in such a way that different latch positions are able to be specified.

10. Adjusting device (10) according to one of claims 7 to 9, **characterised in that** sealing means (84) are arranged between the sleeve (90) and the cap adjusting device (20).

11. Adjusting device (10) according to one of claims 7 to 10, **characterised in that** sealing means (86) are arranged between the sleeve (90) and the coupling part (40).

## Revendications

1. Dispositif de réglage (10) servant à régler des composants pouvant être couplés au dispositif de réglage, en particulier servant à ajuster un réticule d'une lunette de visée, comprenant un système de capuchon de réglage (20) monté de manière à pouvoir tourner au niveau d'une partie de couplage (40), servant à actionner le dispositif de réglage (10), dans lequel la partie de couplage (40) est réalisée afin de transmettre les mouvements du système de capuchon de réglage (20) sur des composants pouvant être reliés à la partie de couplage (40) aux fins de leur réglage, dans lequel un premier moyen de verrouillage (50) disposé au niveau de la partie de couplage (40) peut être amené en prise avec un deuxième moyen de verrouillage (60) de telle manière que la position du système de capuchon de réglage (20) est verrouillée par rapport à la partie de couplage (40), dans lequel le deuxième moyen de verrouillage (60) est au moins par segments une bague de verrouillage (62) à denture intérieure, **caractérisé en ce qu'**un moyen d'encliquetage (76) monté sur ressorts au niveau de la partie de couplage (40) peut être amené en prise de manière correspondante, par des évidements d'encliquetage, avec une bague d'encliquetage (70) au niveau du système de capuchon de réglage (20), dans lequel la bague de verrouillage (62) et la bague d'encliquetage (70) présentent le même écart d'encliquetage.

2. Dispositif de réglage (10) selon l'une quelconque des revendications précédentes, **caractérisé en ce que** le premier moyen de verrouillage (50) est au moins par segments une couronne de verrouillage (52) à denture extérieure.

3. Dispositif de réglage (10) selon la revendication 2, **caractérisé en ce que** la couronne de verrouillage (52) est fixée de manière bloquée en rotation au niveau de la partie de couplage (40) par une goupille (56) et par des évidements (54) correspondants.

4. Dispositif de réglage (10) selon l'une quelconque des revendications précédentes, **caractérisé en ce que** la bague de verrouillage (62) est montée au moyen d'une goupille de positionnement (78) de manière bloquée en rotation par rapport à la bague d'encliquetage (70).

5. Dispositif de réglage (10) selon la revendication 4, **caractérisé en ce que** la bague de verrouillage (62) peut être guidée de manière à pouvoir coulisser axialement sur la goupille de positionnement (78).

6. Dispositif de réglage (10) selon l'une quelconque des revendications 4 ou 5, **caractérisé en ce que** la goupille de positionnement (78) est fixée au niveau du système de capuchon de réglage (20).

7. Dispositif de réglage (10) selon l'une quelconque des revendications précédentes, **caractérisé en ce que** la bague de verrouillage (62) est fixée au niveau d'une douille (90) pouvant coulisser axialement.

8. Dispositif de réglage (10) selon la revendication 7, **caractérisé en ce que** la douille (90) présente une partie faisant saillie (95).

9. Dispositif de réglage (10) selon l'une quelconque des revendications 7 ou 8, **caractérisé en ce que** sont disposés au niveau de la douille (90) des moyens d'encliquetage (92, 93), qui agissent avec un moyen d'encliquetage (24) au niveau du système de capuchon de réglage (20) de telle manière que différentes positions d'encliquetage peuvent être définies.

10. Dispositif de réglage (10) selon l'une quelconque des revendications 7 à 9, **caractérisé en ce que** des moyens d'étanchéité (84) sont disposés entre la douille (90) et le système de capuchon de réglage (20).

11. Dispositif de réglage (10) selon l'une quelconque des revendications 7 à 10, **caractérisé en ce que** des moyens d'étanchéité (86) sont disposés entre la douille (90) et la partie de couplage (40).
